# EUROPEAN PATENT APPLICATION

(11) **EP 1 975 867 A2**
(43) Date of publication of application: **01.10.2008**
(21) Application number: 08102885.4
(22) Date of filing: 25.03.2008
(51) Int. Cl.: G06Q 30/00

(54) **Music data providing system**

(30) Priority: 26.03.2007 JP 2007079738; 26.03.2007 JP 2007079739
(71) Applicant: Yamaha Corporation, Hamamatsu-shi, Shizuoka 430-8650 (JP)
(72) Inventor: Kotani, Masaki, Hamamatsu-shi Shizuoka 430-8650 (JP); Oshima, Ikuro, Hamamatsu-shi Shizuoka 430-8650 (JP); Umezawa, Satoru, Hamamatsu-shi Shizuoka 430-8650 (JP); Yanase, Tsutomu, Hamamatsu-shi Shizuoka 430-8650 (JP)
(74) Representative: Ettmayr, Andreas

(57) **Abstract**

Creation of a music selection list is performed by a client terminal such as a personal computer, and music data specified by the music selection list is utilized by an electronic music instrument. The user can receive music data providing service based on a user's own music selection list even with the electronic music instrument having a simple user interface. Processing of selecting a music selection list for a user from a large number of music selection lists is performed by the personal computer, and the music data specified by the selected music selection list is delivered to the electronic music instrument. A desired music selection list can be selected easily from a large number of music selection lists even with the electronic music instrument having a simple user interface.

## Description

### BACKGROUND OF THE INVENTION

### [Technical Field]

This invention relates to a music data providing system by which a user of an electronic music apparatus such as an electric instrument can receive a music data providing service based on a music selection list.

### [Related Art]

Conventionally, a system for delivering, from a contents delivery server, contents such as music to a user of a personal computer or the like, who accesses the contents delivery server, is known. For example, JP 2003-6096 A discloses a first program reproduction system allowing each user of a client PC (personal computer) to select favorable contents fro creating their own original program, and to reproduce the contents such as MIDI files and audio files in the reproduction order as specified by the original program.
JP 2003-6096 A discloses a second program reproduction system in which a program providing server (contents distribution server) provisionally prepares a large number of programs. A client terminal (personal computer) registers favorite programs which meet preference of a user. The user can reproduce music contents such as MIFI file and audio file sequentially as prescribed by the favorite program.

The first program reproduction system, however, is a system intended to create user's own program by a personal computer for listening music contents, and therefore the system focuses on the reproduction use of the music data and abounds with the equipment for the purpose. However, in case of an electronic instrument, the equipment for creating a program such as a display and an operator is limited, and it is difficult to create user's own program using a dedicated electronic music apparatus such as the electronic instrument that includes a simple user interface (UI) only.
The second program reproduction system, however, is a system intended to allow a user to listen to music contents included in favorite programs registered by the user using a personal computer, and therefore the system focuses on the reproduction use of the music data and abounds with the equipment for the purpose. However, in case of an electronic instrument, the equipment such as a display and an operator is limited for searching the favorite programs, and it is difficult to select desired programs from a large number of programs using a dedicated electronic music apparatus such as the electronic instrument that includes a simple user interface (UI) only.

### SUMMARY O THE INVENTION

In view of such circumstances, it is a first object of this invention to provide a music data providing system allowing a user to receive a music data providing service based on user's own music selection list even with an electronic music apparatus that just has a simple user interface.
In view of such circumstances, it is a second object of this invention to provide a music data providing system allowing a user to select desired music selection lists easily from a large number of music selection lists (programs) even with an electronic music apparatus that just has a simple user interface.

In accordance with a first aspect of the invention, a music data providing system comprises: a first server which is accessible by a client terminal through a communication network; a second server which is accessible by an electronic music apparatus through the communication network; and a database that is useable by the first server and the second server. The database comprises: music selection list storage means that is provided for storing music selection lists; and music data storage means that stores music data of music pieces. The first server comprises: music selection screen transmission means that transmits music selection screen data to the client terminal; music designation information reception means that receives, from the client terminal, music designation information that designates one or more of music pieces selected by the client terminal using the music selection screen data; music selection list creation means that creates a music selection list based on the music designation information received by the music designation information reception means; and music selection list storage control means that stores the music selection list created by the music selection list creation means in the music selection list storage means of the database. The second server comprises: music selection list transmission means that transmits, in response to a request from the electronic music apparatus, a music selection list stored in the music selection list storage means of the database to the electronic music apparatus; and music data transmission means that transmits, in response to a request from the electronic music apparatus, music data of music pieces specified by the music selection list transmitted by the music selection list transmission means, from the music data storage means of the database to the electronic music apparatus.

In accordance with a second aspect of the invention, a music data providing system comprises: a first server which is accessible by a client terminal through a communication network; a second server which is accessible by an electronic music apparatus through the communication network; and a database useable by the first server and the second server. The database comprises: music selection list storage means that is provided for storing a plurality of music selection lists; and music data storage means that stores music data of music pieces. The first server comprises: list selection screen transmission means that transmits list selection screen data to the client terminal; list designation information reception means that receives, from the client terminal, list designation information that designates a music selection list which is selected by the client terminal using the list selection screen data; and music selection list storage control means that stores, in the music selection list storage means, the music selection list designated by the list designation information received by the list designation information reception means. The second server comprises: music selection list transmission means that transmits, in response to a request from the electronic music apparatus, a music selection list designated by list designation information, from the music selection list storage means of the database to the electronic music apparatus; and music data transmission means that transmits, in response to a request from the electronic music apparatus, music data of the music pieces specified by the music selection list transmitted by the music selection list transmission means, from the music data storage means of the database to the electronic music apparatus.

Preferably, the electronic musical apparatus has at least one of a tone generator, a keyboard and a display, and music data reproduction means of the electronic music apparatus drives at least one of the tone generator, the keyboard and the display based on the music data received from the second server.

According to the first aspect of this invention, the creation of the music selection list (program) itself is performed by the client terminal such as a personal computer, and the music data specified by the music selection list is accepted by the electronic music apparatus as stated above, and therefore the user can receive a music data providing service based on a user's own music selection list even with an electronic music apparatus having a simple user interface, so that the user can enjoy the reproduction of music data based on a desired music selection list easily.

According to the second aspect of this invention, the processing of selecting a music selection list for a user from a large number of music selection lists (programs) is performed by the client terminal such as a personal computer, and the music data specified by the music selection list selected by the user is delivered to the electronic music apparatus as stated above, and therefore a desired music selection list can be selected easily from a large number of music selection lists (programs) even with an electronic music apparatus having a simple user interface, so that the user can enjoy the reproduction of music data based on a desired music selection list easily.
Further, in the music data providing system according to this invention, music data received from the second server is reproduced by driving of a tone generator unit, driving of a keyboard or driving of a display for performance, and therefore in an electronic music apparatus especially in an electronic instrument using MIDI data, the user can enjoy the reproduction of music data based on the desired music selection list.

### BRIEF DESCRIPTION OF THE DRAWINGS

Figs. 1(1) and 1(2) show one exemplary configuration of a music data providing system according to one embodiment of this invention.
Fig. 2 shows one example of the music information, the music selection list and the channel list used in the music data providing system according to one embodiment of this invention.
Fig. 3 shows one example of a user interface of the electronic instrument (electronic music apparatus) according to one embodiment of this invention.
Figs. 4(1) and 4(2) are flowcharts showing a registration processing example according to one embodiment of this invention.
Fig. 5 is a flowchart showing a reproduction processing example according to one embodiment of this invention.
Fig. 6 shows another configuration example of the overall system according to one embodiment of this invention.

### DETAILED DESCRIPTION OF THE INVENTION

### [System Overview]

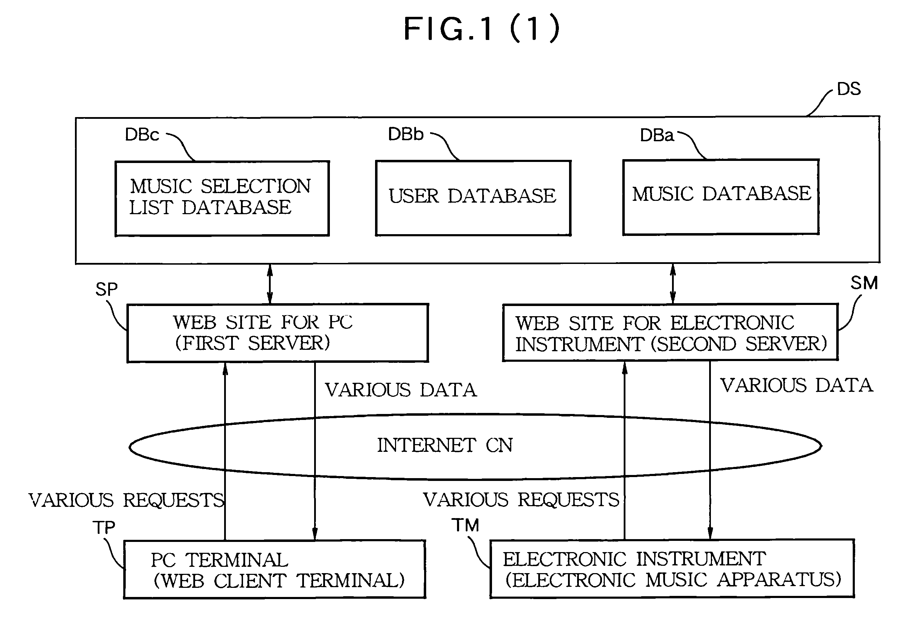

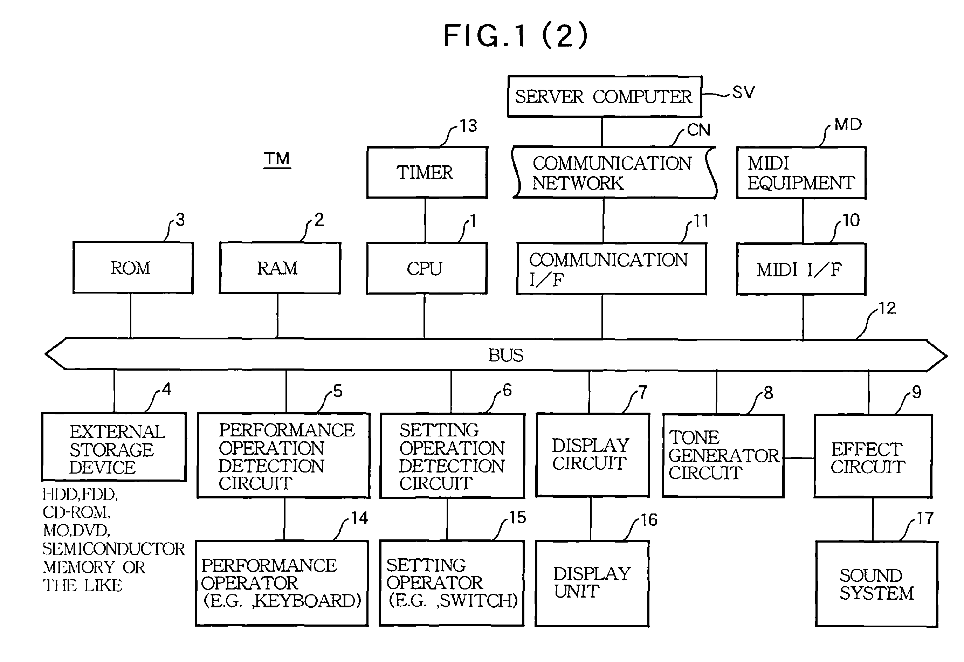

Fig. 1 shows one exemplary configuration of a music data providing system according to one embodiment of this invention. Fig. 1(1) shows the configuration of the overall system, and this music data providing system includes a WEB client terminal TP, an electronic music apparatus TM, a first server for providing a WEB site SP and a second server for providing a WEB site SM, which are connected with a broad band network CN such as the Internet. The WEB client terminal TP is composed of a personal computer (PC), and is capable of receiving necessary data from the first WEB site SP and using the same. The electronic music apparatus TM is composed of an electronic instrument, and is capable of receiving necessary data from the second WEB site SM and using the same.

The first WEB site SP is a server computer for configuring a music selection list (Se) for each user in response to an access from the personal computer (PC) terminal TP, and is called a WEB site for WEB client terminal or for personal computer (PC). In this specification, the term "WEB site SP" may denote the web site itself in some occasions and may represent the first server which provides the web site in other occasions. The WEB site SP for PC manages a database system DS including a music database DBa, a user database DBb, an music selection list database DBc and the like, where the user and the music selection list databases DBb and DBc function as music selection list storage means to store a music selection list (Se) for instructing music data to be reproduced one by one.

The music database DBa stores a large number of music data (this may be simply called "tune"), and each music data may be music data entity representing the entity of a tune such as performance data (MIDI data) and audio data (waveform data), to which music information (Md) that describes the contents of the tune is added. The WEB site SP for PC selects, in response to an access from the PC terminal TP, user's individually desired music data among the music data stored in the music database DBa, creates a music selection list (Se) in which music information (Md) on the selected one or plural (n) music data is described, and can register the same as an individually selected music selection list in the user database DBb for each user. The individually selected music selection list created by the user in this way is called "MySelection" (my selection).

Further, the music selection list database DBc stores a large number of music selection lists beforehand, which are collectively called "ALL" (all) (e.g., the maximum music selection list number = 1,000). Each music selection list is a music selection list (Se) obtained by dividing music information (Md) on music data stored in the music database DBa into a plurality of music groups and describing one or plural (n) pieces of music information (Md) constituting the respective music groups. These music selection lists are classified and kept so that they can be searched in terms of music genres and artists, for example.

The WEB site SP for PC, in response to an access from the PC terminal TP, allows the user to select any number (m) of any music selection lists (Se) among the already-existing music list group (ALL) and register the selected one or plural (m) music selection lists as a group selected music selection list in the user database DBb for each user. The registered each group music selection list is called "MyChannel" (my channel), and the group music selection lists for each user is collectively called "MyChannels" (my channels). Note here that other music selection lists such as recommended music selection list edited by the WEB site SP for PC beforehand may be prepared in the music selection list database DBc, as needed. Further, the respective music selection lists in these music selection lists (MySelection, MyChannel, ALL, ···) are dealt with in the information unit called "channel".

The second WEB site SM is a server computer for providing, in response to an access from the electronic instrument TM operated by the same user as the user of the PC terminal TP, music data to the electronic instrument TM, and is called a WEB site for electronic music apparatus or for electronic instrument. In this specification, the term "WEB site SM" may denote the web site itself in some occasions or may represent the second server which provides the web site in other occasions. The WEB site SM for electronic instrument shares the database system DS with the WEB site SP for PC, and uses a user ID common to the PC terminal TP and the electronic instrument TM, whereby the WEB site SP for PC and the WEB site SM for electronic instrument can operate cooperatively (work in conjunction with each other) for the same user. Thereby, in response to an access from the electronic instrument TM, the WEB site SM for electronic instrument can provide music data to the electronic instrument TM based on the individually selected music selection list that has been already created by the user (MySelection) and the group music selection list (MyChannels) selected from a large number of music selection lists (ALL).

Fig. 1(2) is a block diagram showing the hardware configuration of the electronic instrument (electronic music apparatus). As the electronic music apparatus TM in the music data providing system according to one embodiment of this invention, an electronic instrument is used as specific equipment having a music information processing function. The electronic instrument TM includes a central processing unit (CPU) 1, a random access memory (RAM) 2, a read-only memory (ROM) 3, an external storage device 4, a performance operation detection circuit 5, a setting operation detection circuit 6, a display circuit 7, a tone generator circuit 8, an effect circuit 9, a MIDI interface (I/F) 10, a communication interface (I/F) 11 and the like, and these components 1 to 11 are connected with each other via a bus 12.

The CPU 1 functions as a data processing unit in conjunction with the RAM 2 and the ROM 3, and executes various music information processing including reproduction processing of music data using a clock based on a timer 13 in accordance with any control program. The RAM 2 is used as a work area for temporarily storing various data required for these processing, and for example, when reproduction processing is carried out, the RAM 2 can keep music data acquired through the WEB site SM. Further, the ROM 3 stores various control programs and control data or the like beforehand, which are required for executing these processing, and the control programs include a music reproduction program for executing the reproduction processing.

The external storage device 4 includes various portable external recording media such as a compact memory card, e.g., a compact disk, a read only memory (CD-ROM), a flexible disk (FD), a magneto-optical (MO) disk, a digital versatile disk (DVD) or a smart media ®, in addition to a built-in storage medium such as a hard disk (HD) or a flash memory, and control programs and any music data including performance data (MIDI data) and audio data(waveform data) can be stored in any external storage device 4.

The performance operation detection circuit 5 constitutes a performance operation unit together with a performance operator 14 such as a keyboard, detects the performance operation contents of the performance operator 14, and introduces performance data corresponding to this to a data processing unit. Further, a main operation operator such as a keyboard is provided with automatic operation mechanism operating in accordance with performance data (MIDI data), so that the main operation operator can be driven by the automatic operation mechanism in accordance with the performance data (MIDI data). Further, the setting operation detection circuit 6 constitutes a setting operation unit together with a setting operator 15 such as a key switch, detects the setting operation contents of the setting operator 15 and introduces setting data corresponding to this to the data processing unit.

The display circuit 7 controls display/lighting contents of a display unit 16 connected therewith in accordance with an instruction from the CPU 1. The display unit 16 is provided with a display element for performance that is used for a performance operation and the reproduction of performance data (MIDI data) and a display element for setting that is used for various setting operations. For instance, the display element for performance includes a display for performance (not illustrated) provided closer to the keyboard that displays various information such as key-pushing guide or the like in accordance with the performance data, whereas the display element for setting includes a text display (Dp) such as LCD or various confirmation lamps (La, Lb, ···). The display element for setting and the display control unit (7) therefor, together with the setting operation units 6 and 15, function as an input/output unit of a user interface (UI) in this electronic instrument TM.

The tone generator circuit 8 and the effect circuit 9 function as a music sound signal generation unit (this may be called a tone generator unit also). For example, in accordance with the performance data input from the performance operation detection circuit 5 and the performance data from the RAM 2 and the external storage device 4, the tone generator circuit 8 generates music sound data (waveform data), and the effect circuit 9 generates a music sound signal to which a predetermined effect is added from the music sound data. Further, the effect circuit 9 also can generate a music sound signal in accordance with audio data from the RAM 2 and the external storage unit 4. A sound system 17 connected after the effect circuit 9 includes a D/A conversion unit, an amplifier and a speaker, and generates music sound based on the music sound signal from the effect circuit 9.

To the MIDI I/F 10 can be connected an external MIDI instrument MD having a MIDI music information processing function in a similar manner to this electronic instrument TM, and MIDI data can be exchanged between this electronic instrument TM and the external MIDI instrument MD through the MIDI I/F 11. To the communication I/F 11 is connected the communication network CN such as the Internet or a local area network (LAN), so that control programs and music data can be acquired from an external server computer SV. The server computer SV functions as a first server for providing the WEB site SM for electronic instrument connected with the Internet CN, and the electronic instrument TM can use music data delivered from the WEB site SM for electronic instrument via the Internet CN.

As the WEB client terminal TP, a personal computer functioning as a general-purpose information processing unit is used, which is used by the same user as the electronic instrument TM. Although the PC terminal TP has a hardware configuration similar to Fig. 1(2), there is no need to provide the music information processing function, i.e., the performance operation unit (5, 14), the music sound signal generation unit (8, 9), the sound system (17) and the MIDI I/F (10). Further, as for the setting operation unit (6, 15) and the display unit (7, 16), a sufficient UI function is provided as compared with the electronic instrument TM, thus enabling communication with the WEB site SP for PC via the communication I/F (11) and the Internet CN to edit the user music selection list (MySelection, MyChannels). Further, a printer may be provided as an output unit so as to print out music information such as the user music selection list and the like.

The WEB site SP for PC, the WEB site SM for electronic instrument and the database system DS each have a hardware configuration similar to that of the PC terminal TP. The database system DS is connected with the respective sites SP and SM via a communication network such as LAN, and the above-stated music database DBa, user database DBb, music selection list database DBc and the like are configured in an external storage device.
Namely, the first site SP is provided by a first server computer, the second site SM is provided by a second server computer, and the database DS is managed by a third server computer which is separate from the first server computer and the second server computer. The first server computer and the second server computer can access to the third server computer so as to utilize the database DS commonly by the first site SP and the second site SM.

The WEB site SP for PC stores music selection list setting screen data (hereinafter called music selection screen data) and list selection screen data in an external storage device. Herein, the music selection screen data is data for enabling necessary item information extracted from the music information (Md) concerning a large number of tunes stored in the music database DBa to be displayed on the client terminal, and has a search condition input function. The PC terminal TP, based on the music selection screen data, displays item information on the tunes prepared beforehand or tunes searched by the search condition at the WEB site SP for each tune in the list form, and any tune can be selectively specified by the user's operation. Further, the list selection screen data is created based on a large number of music selection lists (ALL) stored in the music selection list database DBc, and the PC terminal TP displays, based on the list selection screen data, necessary item information extracted from header information of each of the music selection lists (Se) constituting the music selection list group (ALL) for each music selection list in the list form, and any music selection list (Se) can be selectively specified by the user's operation.

The WEB site SM for electronic instrument stores the user music selection list (MySelection, MyChannels) stored in the user database DBb and the music selection list database DBc and a channel list (Ch) created based on the music selection list (ALL) in an external storage device. The channel list (Ch) can be delivered for each user, and each channel data represents a music group corresponding to each of the music selection lists (Se) constituting these music selection lists (MySelection, MyChannels, All, ···).

### [Providing operation of music data and UI of electronic instrument]

In the music data providing system according to one embodiment of this invention, in response to an access from the PC terminal TP, the WEB site SP for PC creates and configures an individually selected music selection list (MySelection) concerning one or plural tunes searched/selected by the user of the PC terminal TP among a large number of tunes stored in the music database DBa in the database system DS, creates and configures one or plural group selected music selection lists (MyChannels) selected by the user of the PC terminal from a large number of music selection lists (ALL) kept in the music selection list database DBc in the database system DS for each user, each of which are registered in the user database DBb in the database system DS.

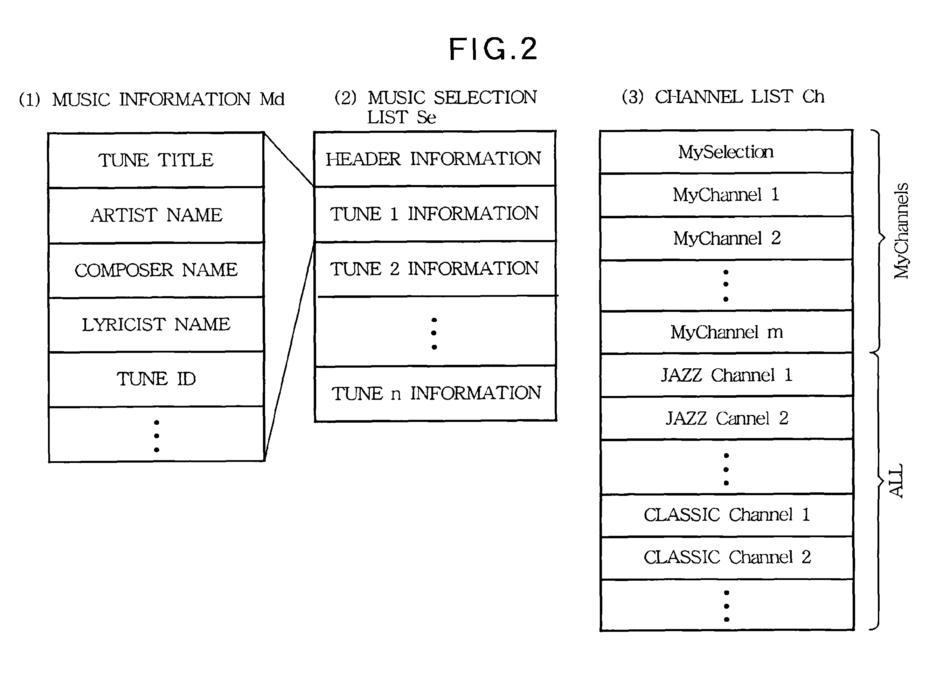

On the other hand, in response to an access from the electronic instrument TM, the WEB site SM for electronic instrument transmits a channel list constituted by the individually selected music selection list (MySelection) and the group selected music selection list (MyChannels) of the electronic instrument user (= PC terminal user) registered in the user database DBb and the music selection lists (ALL) kept beforehand in the music selection list database DBc, and in response to a simple user operation with respect to the channel list on the electronic instrument TM side, selects a music selection list desired by the user among the channel list, and streaming-delivers the music data based on the selected music selection list to the electronic instrument TM. Fig. 2 shows one example of the music information, the music selection list and the channel list used in the music data providing system according to one embodiment of this invention.

Firstly, when the PC terminal TP makes an access to the WEB site SP for PC so as to request "individually selected", the WEB site SP for PC transmits the music selection screen data to the PC terminal TP. The music database DBa stores music information Md as well as each music data, where the music information Md generally is constituted by item information such as a tune title (name of a music piece), an artist name, a composer name, a lyricist name and a tune ID specifying the music piece, as shown in Fig. 2(1). The music selection screen data is created based on necessary item information extracted from the music information Md. The item information for each tune (each music piece) in the music selection screen data includes a tune title, an artist name, a composer name and a lyricist name and the like, for example.

The PC terminal TP displays music selection screen on a display unit based on the music selection screen data received from the WEB site SP for PC and generates music designation information designating desired tunes one by one in accordance with a user's music selection operation on the music selection screen. If an operation determining the designation contents of the tune is performed and a registration request operation is further performed, the PC terminal TP transmits the music designation information to the WEB site SP for PC and requests "MySelection registration". In response to this request, the WEB site SP for PC configures (creates) an individually selected music selection list (MySelection) for reproducing each tune in the designated order by the music designation information and registers the same in the user database DBb.

The music selection list Se including the individually selected music selection list (MySelection) is a program data used for specifying one or plural (=n) tunes to be reproduced, and generally it is constituted by header information and music information concerning tunes to be reproduced as shown in Fig. 2(2). The header information contains a music selection list number (ID), a music selection list name, a URL for music acquisition and the like, followed by music information on "tune 1" to "tune n" to be reproduced: "tune 1 information" to "tune n information" which are arranged in the order of reproduction. In the case of the individually selected music selection list (MySelection), for example, "S00" is assigned to the music selection list number (ID) of the header information, and "MySelection" (or "UserSelection") can be assigned as the music selection list name representing the music selection list in which individual tunes are selected by the user, so that the "tune 1" to "tune n" in the illustrated music information represent tunes designated by the music designation information from the PC terminal TP.

Next, when the PC terminal TP makes an access to the WEB site SP for PC so as to request "group selected", the WEB site SP for PC transmits the list selection screen data to the PC terminal TP. Each music selection list Se constituting the music selection list group (ALL) in the music selection list database DBc also has the configuration as in Fig. 2(2), where codes "000" to "999" are assigned as the music selection list number (ID) of the header information, and a channel number to which a section name such as genre or artists is prefixed is assigned as the music selection list name. The list selection screen data is created based on necessary information extracted from the header information of such an music selection list Se, and item information of each music selection list in the list selection screen data includes a music selection list number (ID), a music selection list name and the like, for example. Note here that each music information in the music selection list Se also has the configuration as in Fig. 2(1).

The PC terminal TP displays list selection screen on a display unit based on the list selection screen data received from the WEB site SP for PC and generates list designation information designating a desired music selection list Se one by one in accordance with a user's music selection list selection operation on the list selection screen. If an operation determining the designation contents of the selection list is performed and a registration request operation is further performed, the PC terminal TP transmits the list designation information to the WEB site SP for PC and requests "MyChannels registration". In response to this request, the WEB site SP for PC configures (creates) a group selected music selection list (MyChannels) constituted by the music selection list Se designated by the list designation information, and registers the same in the user database DBb. In this case, the music selection list number (ID) and the music selection list name of the header information in each group selected music selection list Se to be registered are changed into information that can be specified, so that codes "C00" to "C99" are assigned to the music selection list number (ID) so as to correspond to the designated order of the corresponding music selection list Se, and a channel number to which "MyChannel" (or "UserChannel") representing that the music selection list is selected by the user as music selection group is prefixed can be assigned to the music selection list name, for example.

The WEB site SM for electronic instrument accesses the database system DS on a regular basis or every time an access is made from the electronic instrument TM, automatically generates a channel list Ch for each user based on a large number of music selection lists (ALL) stored in the music selection list database DBc and the user music selection list [MySelection, MyChannel(s)] registered in the user database DBb, and stores the same in the external storage device 4. When an access is made from the electronic instrument TM to the WEB site SM for electronic instrument, the WEB site SM for electronic instrument firstly delivers, to the electronic instrument TM, a channel list Ch in which a tune group deliverable to the electronic instrument user is listed. Each channel data of the channel list Ch is constituted by one music selection list Se.

As described above, in the case where the individually selected music selection list (MySelection) and the group selected music selection list (MyChannels) have been already registered, a channel list Ch as shown in Fig. 2(3) is delivered to the electronic instrument TM, for example. In the example of Fig. 2(3), the channel list Ch is constituted by an individually selected music selection list: MySelection, plural=m group selected music selection lists included in a group selected music selection list group (MyChannels): MyChannel 1 to MyChannel m, and a large number of music selection lists included in the music selection list group (ALL): JAZZ Channel 1, JAZZ Channel 2, ··· CLASSIC Channel 1, CLASSIC Channel 2, ··· .

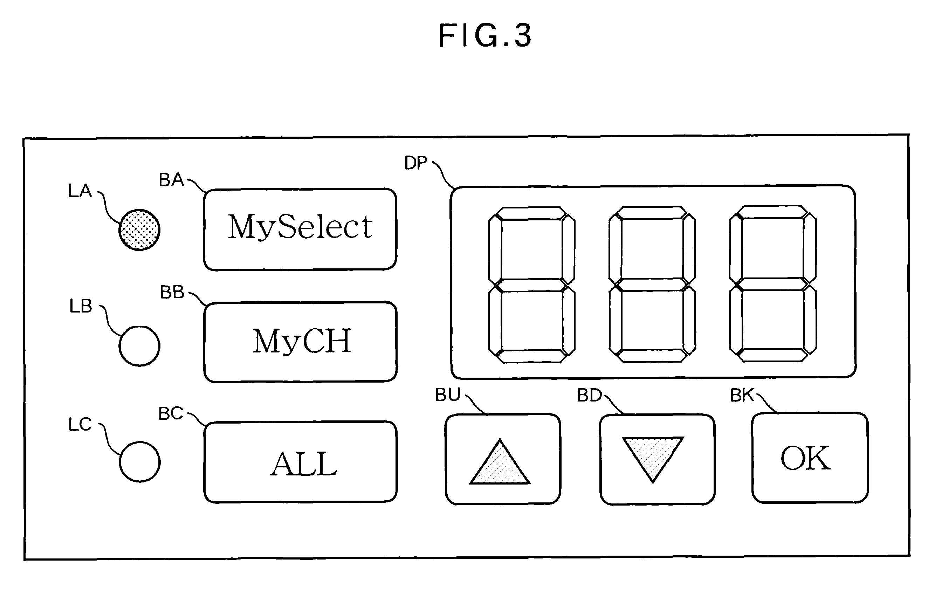

By a simple channel selection operation by the user, the electronic instrument TM can select a desired music selection list (channel) from the delivered channel list Ch. Fig. 3 shows one example of a user interface (UI) of the electronic instrument (electronic music apparatus) according to one embodiment of this invention. On an operation panel of the electronic instrument TM is provided "MySelect" (my select) button BA, "MyCH" (my channel) button BB, "ALL" (all) button BC, up button BU, down button BD, "OK" (determination/request) button and the like as setting operators 15. As display elements of the display unit 16, "MySelect" (my select) lamp LA, "MyCH" (my channel) lamp LB and "ALL" (all) lamp LC are provided at positions corresponding to the buttons BA, BB and BC, and a display unit DP for setting is provided in the vicinity of the up and down buttons BU and BD. The display unit DP can display guide information for each channel of the channel list Ch [for example, the music selection list number (ID) and the music selection list name in the music selection list Se], and in the illustrated example, it is a 7-segment type text display for three-digits, which can display the music selection list number (ID).

When receiving the channel list Ch, the electronic instrument TM displays the text "LST" representing the reception of the channel list Ch on the text display DP. The following describes the case where the received channel list Ch is constituted by the channel group: "MySelection", "MyChannels" and "ALL" as shown in Fig. 2(3), for example, and when the user operates to push "MySelect" button BA, "MySelection" channel is selected from the channel list Ch and "MySelect" lamp LA is lit up. Then, when the user operates to push "OK" button BK, the individually selected music selection list (MySelection) corresponding to this channel is designated as the music selection list to be requested for delivery to the WEB site SM for electronic instrument. Herein, when "MySelection" channel is selected, the music selection number (ID) = "S00" may be displayed on the text display DP, which is guide information of this channel.

On the other hand, when "MyCH" button is pressed, the first channel: "MyChannel 1" of the channel group: "MyChannels" is selected from the channel list Ch, while lighting up the "MySelect" lamp LB, and the music selection list number (ID) = "C00" that is guide information of the first channel in the group is displayed on the text display DP. Herein, if the music selection list number (ID) displayed on the display DP does not show the channel representing the desired group selected music selection list, the channel selection can be changed within the channel group: "MyChannels" by the user's operation with the up or down buttons BU and BD, and in response to this operation, the display contents of the text display DP also is changed. Then, when "OK" button BK is pressed at the time when the desired music selection list number (ID) is displayed, the music selection list in the group selected music selection list group (MyChannels) corresponding to the channel of this music selection list number (ID) is designated as the music selection list to be requested.

Note here that if a certain group selected music selection list is designated at the time of the last access or this access, the music selection list number (ID) of the latest designated group selected music selection list may be stored as history information, and when "MyCH" button is newly pressed, it may be configured to select the channel of the music selection list number (ID) indicated by the history information and set so that such a music selection list number (ID) is displayed.

When "ALL" button is pressed, the first channel: "JAZZ Channel 1" of the "ALL" channel group is selected from the channel list Ch, while lighting up the "ALL" lamp LC, and the music selection list number (ID) = "000" that is guide information of the first channel in the group is displayed on the text display DP. Herein, if the music selection list number (ID) displayed on the display DP does not show the channel representing the desired music selection list, the channel selection can be changed within the "ALL" channel group by the user's operation with the up or down buttons BU and BD, and in response to this operation, the display contents of the text display DP also is changed. Then, when "OK" button BK is pressed at the time when the desired music selection list number (ID) is displayed, the music selection list in the music selection list group (ALL) corresponding to the channel of this music selection list number (ID) is designated as the music selection list to be requested for delivery.

Note here that if a certain music selection list is designated at the time of the last access or this access, the music selection list number (ID) of the latest designated music selection list may be stored as history information, and when "ALL" button is newly pressed, it may be configured to select the channel of the music selection list number (ID) indicated by the history information and set so that such a music selection list number (ID) is displayed.

In this way, the electronic instrument TM designates the individually selected music selection list (MySelection), the music selection list in the group selected music selection list group (MyChannels) and the music selection list in the music selection list group (ALL) corresponding to the channel selected from the channel list Ch, and requests the WEB site SM for electronic instrument to deliver the designated music selection list. The WEB site SM for electronic instrument delivers, in response to this, the designated music selection list to the electronic instrument TM. Then, the electronic instrument TM requests the WEB site SM for electronic instrument to deliver music data based on the delivered music selection list, and the WEB site SM for electronic instrument delivers, in response to this request, the music data specified by the music selection list to the electronic instrument TM.

Note here that, in the above-described UI example of the electronic instrument TM, although the simplest three-digit text display is used as the display DP for setting to display the music selection list number (ID), it is preferably configured so as to allow more detailed guide information to be displayed insofar as the display size and functions (e.g., digit number and segment number) permit. For instance, in the case of 8-digit text display, an abbreviation of the music selection list number (ID) and the music selection list name (e.g., USELE; UCH00, UCH01, ··;·, JAZ00, JAZ01, ···; CLS00, CLS01, ···) may be displayed.

As described above, according to the features of the music selection list setting (MySelection) based on the individual selection of tunes in this music data providing system, with respect to the music data providing site constituted by the sites SP and SM for PC and electronic instrument, the PC terminal TP and the electronic instrument TM can communicate with the WEB sites SP and SM for PC and for electronic instrument, respectively, via the communication network CN, and the music database DBa stores a large number of music data. Firstly, the PC terminal TP accesses the site SP for PC, so as to configure a music selection list for instructing tunes desired by the user one by one and make the user database DBb store the configured music selection list (MySelection) as a program for music reproduction. Then, the electronic instrument TM accesses the site SM for electronic instrument to reproduce music data provided one by one from the site SM electronic instrument in accordance with the music selection list (MySelection) read out from the user database DBb.

Further, according to the features of the music selection list setting (MyChannels) based on the selection of the music selection list (music group) in this music data providing system, with respect to the music data providing site constituted by the sites SP and SM for PC and electronic instrument, the PC terminal TP and the electronic instrument TM can communicate with the sites SP and SM, respectively, via the communication network CN. The music database DBa stores a large number of music data, and the music selection list database DBc prepares a large number of music selection lists (ALL) for instructing tunes to be reproduced one by one as a program for music reproduction. Firstly, the PC terminal TP accesses the site SP for PC, so as to select the user's desired music selection list [MyChannel(s)] from the music selection list (ALL) and make the user database DBb store the same. Then, the electronic instrument TM accesses the site SM for electronic instrument to reproduce music data provided one by one from the site SM electronic instrument in accordance with the music selection list (MyChannels) read out from the user database DBb.

### [Registration processing flow example]

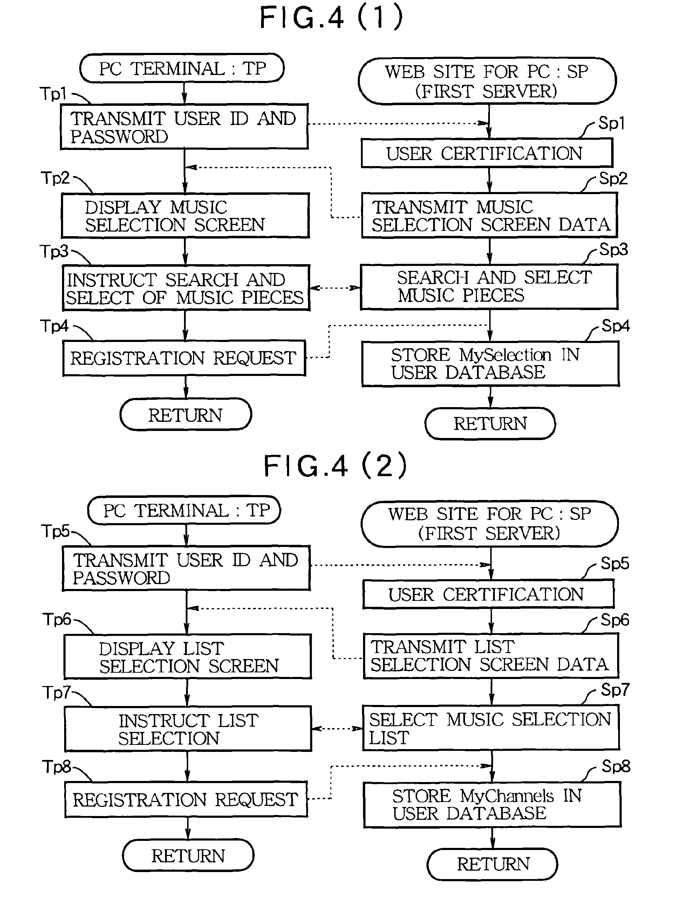

Fig. 4 is a flowchart showing a registration processing example according to one embodiment of this invention, where Fig. 4(1) is a flowchart of "MySelection (individually selected music selection list) registration processing "in which any tune is selected by a user's operation to configure an individually selected music selection list, and Fig. 4(2) is a flowchart of "MyChannels (group selected music selection list) registration processing" in which any music selection list (music group) is selected by a user's operation to configure a group selected music selection list.

During the MySelection registration processing, in the processing flow of Fig. 4(1), firstly, the personal computer (PC) terminal TP transmits, in response to a user's operation, a user ID and a password to the WEB site SP for PC for access and requests "individually selected" (Step Tp1). The WEB site SP for PC certifies that the user of the corresponding PC terminal TP is a correct client user based on the comparison of the received user ID and password with the user ID and password registered beforehand and confirms the request of "individually selected" (Step Sp1), and then transmits music selection screen data to the PC terminal TP (Sp2).

The PC terminal TP displays, based on the received music selection screen data, an initial music selection screen in which item information is laid out on a tune-by-tune basis for the tunes determined beforehand, and urges the user to operate the music selection screen (Tp2). The music selection screen is provided with a search condition designation window, thus allowing search conditions (e.g., genre and artist) to be designated by a user's operation to instruct the WEB site SP for PC to search tunes matching with the search conditions, so as to update the music selection screen with the tunes searched by the WEB site SP for PC. Thus, the PC terminal TP instructs, in response to the user's operation, the WEB site SP for PC to search a tune matching with the designated search conditions or designates a desired tune one by one as a tune for individual selection from the initial music selection screen or the updated music selection screen and instructs the WEB site SP for PC to select such a tune (Tp3). On the other hand, the WEB site SP for PC searches a tune and returns a result of the search, or accepts the instructed tune selection contents (Sp3).

Such communication is repeated (Tp3, Sp3), so as to complete the designation of all of the tunes (including the designation of reproduction order), and if there is a determination and registration request operation from the user, the PC terminal TP generates music designation information for determining the designation contents of the tune and transmits the music designation information to the WEB site SP for PC to request "MySelection registration" (Tp4), so as to complete the access this time. Further, the WEB site SP for PC, in response to this request, generates an individually selected music selection list (MySelection) of the determined designation contents and stores the same in the user database DBb (Sp4). Then, the response to the PC terminal TP at this time is finished to stand by for a new access.

During the MyChannels registration processing, in the processing flow of Fig. 4(2), firstly, the personal computer (PC) terminal TP transmits, in response to a user's operation, a user ID and a password to the WEB site SP for PC for access and requests "group selected" (Step Tp5). The WEB site SP for PC certifies that the user of the corresponding PC terminal TP is a correct client user based on the comparison of the received user ID and password with the user ID and password registered beforehand and confirms the request of "group selected" (Step Sp5), and then transmits list selection screen data to the PC terminal TP (Sp6).

The PC terminal TP displays, based on the received list selection screen data, a list selection screen in which item information is laid out for each music selection list, and urges the user to operate the list selection screen (Tp6). In accordance with the user's operation, a desired music selection list is designated as a group selected music selection list one by one from the list selection screen, and instructs the WEB site SP for PC to select the corresponding music selection list (Tp7). On the other hand, the WEB site SP for PC accepts the selected and instructed music selection list as a group individually selected music selection list (Sp7).

Such communication is repeated (Tp7, Sp7), so as to complete the designation of all of the music selection lists, and if there is a determination and registration request operation from the user, the PC terminal TP generates list designation information for determining the designation contents of the music selection list and transmits the list designation information to the WEB site SP for PC to request "MyChannels registration" (Tp8), so as to complete the access this time. Further, the WEB site SP for PC, in response to this request, generates a group selected music selection list (group) [MyChannel(s)] of the determined designation contents and stores the same in the user database DBb (Sp8). Then, the response to the PC terminal TP at this time is finished to stand by for a new access.

### [Reproduction processing flow example]

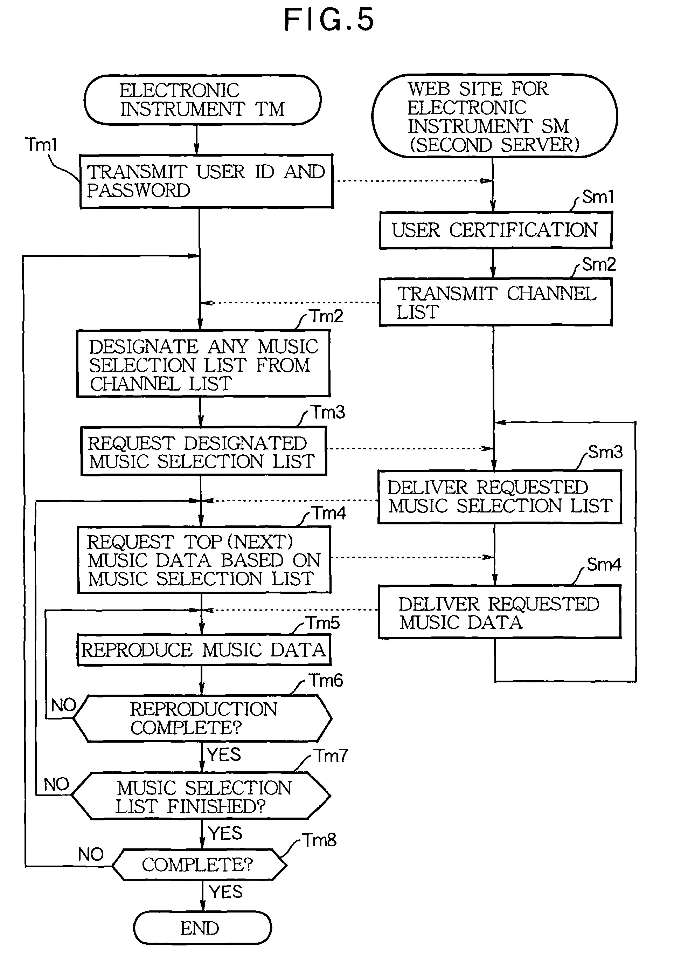

The electronic instrument TM can reproduce desired music data using music selection list registered in the user database DBb by the registration processing or the music selection lists (ALL) prepared in the music selection list database DBc. Fig. 5 is a flowchart showing one example of the reproduction processing according to one embodiment of this invention.

In the reproduction processing, firstly, the electronic instrument TM transmits, in response to a user's operation, a user ID and a password (user identification information) to the WEB site SM for electronic instrument for access (Step Tm1). Note that the user ID and the password transmitted here are the same as those transmitted by the PC terminal TP. The WEB site SM for electronic instrument certifies that the user of the corresponding electronic instrument TM is a correct client user that is the same as the PC terminal TP based on the comparison of the received user ID and password with the user ID and password registered beforehand (Step Sm1), and then transmits a channel list Ch to the electronic instrument TM (Sm2). By such a manner, the system performs authentication or verification of the user with the identification information.
Namely, the first site SP receives, from the client terminal TP, identification information for identifying a user of the client terminal TP, and the second site SM receives, from the electronic music apparatus TM, identification information for identifying a user of the electronic music apparatus TM, such that the music data providing system authenticates the user of the electronic music apparatus TM if the identification information received by the second site SM is the same as the identification information received by the first site SP, and that the identification information of the user is used commonly between the first site SP and the second site SM.

The electronic instrument TM keeps the received channel list Ch in the RAM 2, while displaying "ChL" on the display DP indicating the reception of the channel list Ch, and stands by for a music selection list (channel) designation operation. Note that when an access is made to the WEB site SM for electronic instrument for the first time, initial values (e.g., music selection list number "C00" or "000") are set in group selected and music selection list number storage registers, respectively, in the RAM 2, and in the case of the second time or later, the respective music selection list numbers stored in the music selection list number storage area in the external storage device 4 may be loaded. Then, if the user performs a designation operation, any one of the music selection lists (channel) is designated as the reproduction target in accordance with the operation (Tm2).

For instance, when the buttons BA and BK are operated successively, the lamp LA is lit up so as to designate the individually selected music selection list (MySelection). When the buttons BB; BU, BD; BK are operated successively, the lamp LB is lit up so as to inform the user of the list selection from the group selected music selection list group (MyChannels), and the group selected music selection list number "C××" corresponding to the operation of the buttons BU and BD is displayed on the display DP to designate the group selected music selection list corresponding to the music selection list number. Further, when the buttons BC; BU, BD; BK are operated successively, the lamp LC is lit up so as to inform the user of the list selection from the music selection list group (ALL), and the music selection list number "×××" corresponding to the operation of the buttons BU and BD is displayed on the display DP to designate the music selection list corresponding to this music selection list number. Herein, in the case where the group selected music selection list is designated or the music selection list is designated, the contents of the group selected or music selection list number storage register in the RAM 2 are updated with the music selection list number "C××" or "×××". Then, when the button BK is further operated, a request for the delivery of the designated music selection list is made to the WEB site SM for electronic instrument (Tm3).

The WEB site SM for electronic instrument, in response to this request, acquires the requested music selection list from the database system DS and delivers it to the electronic instrument TM (Sm3). That is, reference is made to the user database DBb so as to deliver the individually selected music selection list (MySelection) or the corresponding music selection list in the group selected music selection list group (MyChannels), or reference is made to the music selection list database DBb and delivers the corresponding music selection list in the music selection list group (ALL). The electronic instrument TM keeps the delivered music selection list in the RAM 2, reads out the music information contained in this music selection list from the beginning one by one, and firstly requests the WEB site SM for electronic instrument to deliver the music data specified by the music information at the beginning (Tm4). The WEB site SM reads out the requested music data from the music database DBa in response to this, and delivers the same to the electronic instrument TM (Sm4).

The electronic instrument TM keeps the delivered music data in the RAM 2 and reproduces the music data (Tm5). In the case where this music data is performance data (MIDI data), the reproduction thereof is conducted by using any one of or a plurality of the driving of the tone generator unit (8, 9), the driving of the keyboard (14) by automatic operation mechanism and the driving of the performance display (15). Note that as for such driving, a plurality of driving units may be included in one electronic instrument (electronic music apparatus) TM or only one may be included. When a plurality of driving units are included, preferably the user can set which one of the driving units should be effective. For instance, it is set that the tone generator unit is made effective, the music data kept in the RAM 2 is supplied to the tone generator unit (music sound signal generation unit) 8, 9 to emit sound from the sound system 17.

When the reproduction of the music data starts, it is checked whether the reproduction of the music data is completed or not (Tm6), and until the reproduction is completed (Tm6=NO), the reproduction of the music data is maintained, and when the reproduction is completed (Tm6=YES), it is checked whether the reading of the music information from the music selection list arrives at the music information at the end or not (Tm7). Herein, if it does not arrive at the music information at the end (Tm7=NO), the process returns to the music data delivery request step (Tm4).

At the music data delivery request step (Tm4), a request is made to the WEB site SM to deliver the music data specified by the following music information in accordance with the URL for music acquisition, and when the following music data is accepted (Sm4), the following music data is reproduced (Tm5, Tm6), and it is checked whether the end of the music selection list is or not (Tm7). Until it does not arrive at the end of the music selection list (Tm7=NO), such an operation (Tm4 to Tm7) is repeated, and when the reproduction of all music data specified by all music information included in the music selection list is completed (Tm7=YES), then it is checked whether an instruction for reproduction processing completion is issued or not by the operation of the reproduction completion button (not illustrated) (Tm8).

Herein, if the instruction for reproduction processing completion is not issued (Tm8=NO), the process returns to the music selection list designation step (Tm2), where a new music selection list is designated from the channel list Ch, so as to receive the delivery of the new music selection list (Sm3) and reproduce the music data one by one (Tm2 to Tm7), and then the instruction for the reproduction processing completion is checked (Tm8). Until the instruction for the reproduction processing completion is issued (Tm8=NO), such an operation (Tm2 to Tm8) is repeated, and if the instruction for the reproduction processing completion is issued (Tm8=YES), the stored contents in the music selection list number storage register in the RAM 2 is stored in the music selection list number storage area of the external storage device 4, and the WEB site SM for electronic instrument is informed of the completion of the reproduction processing, and then this reproduction processing is completed. Further, the WEB site SM, in response to this notification, returns to a stand-by state for a new access.

### [Other configuration example of the overall system]

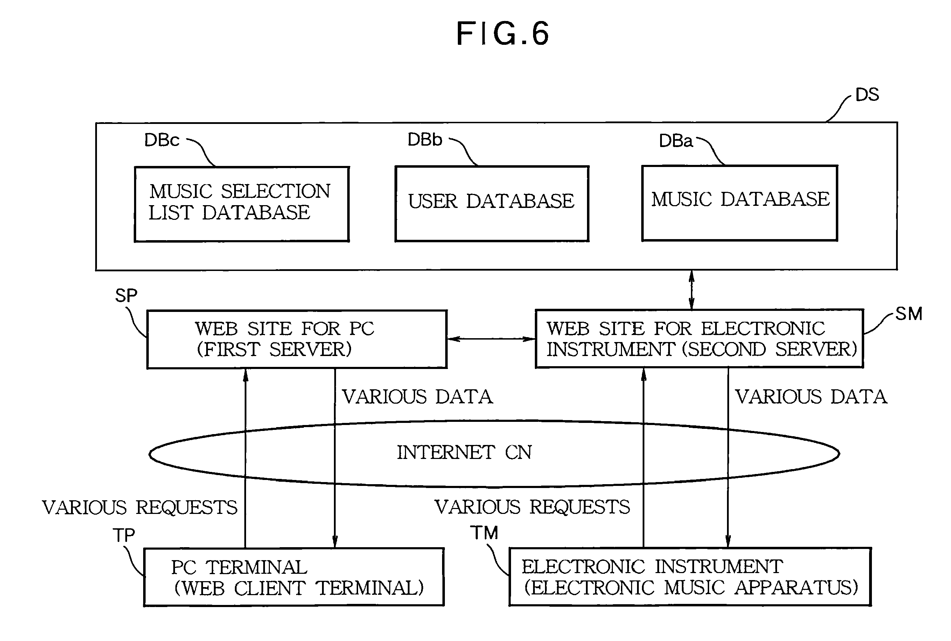

The database system DS is not limited to the one commonly used by the WEB site SP for PC and the WEB site SM for electronic instrument, and it is configured so as to belong to either one of the web sites, so that the WEB sites work in association with each other. For example, as shown in Fig. 6, the database system DS may belong to the WEB site SM for electronic instrument, and when the user music selection list (MySelection, MyChannels) is created, the WEB site SP for PC may inquire the WEB site SM for electronic instrument to acquire necessary information. Further, among the databases DBa to DBc of the database system DS, all of the databases DBa to DBc do not necessarily belong to one of the WEB sites, and they may belong to the WEB site SP for PC or the WEB site SM for electronic instrument separately.
Namely, the first site SP is provided by a first server computer, the second site SM is provided by a second server computer, and the database DS is managed by one of the first server computer and the second server computer, and the other of the first server computer and the second server computer can access to the one of the first server computer and the second server computer so as to utilize the database DS.

### [Various embodiments]

Although preferred embodiments of this invention have been described with reference to the drawings, they are illustrative only and may be modified variously without departing from the spirit of this invention. For example, the user music selection list (MySelection, MyChannels) created for personal use may be shared with other users. For example, there is a service of the user music selection list (MySelection, MyChannels) at a part of the SNS (Social Networking System), and a user music selection list (MySelection, MyChannels) created by another user that is set as a friend of the user in the SNS may be used.

As a method for inputting and setting a user ID and a password in the electronic music apparatus TM, although a method for inputting and setting using a display and operators provided on the instrument body is available, it is relatively difficult to conduct inputting and setting in this way in terms of the limitation on the display function and the number of operators. Thus, it is preferable to send information inputted and set by an external apparatus such as a PC to the electronic instrument TM via a removable storage medium or via a communication IF. Namely, the electronic music apparatus TM may have acquiring means for acquiring identification information of a user who uses the electronic music apparatus TM, and transmission means for transmitting the acquired identification information to the second site SM for authentication of the user, the acquiring means being provided in the form of a communication interface for receiving a signal carrying the identification information, or provided in the form of an adapter for receiving a removable memory medium containing the identification information.

The music data provided to the electronic music apparatus TM may be any kind of data such as MIDI data, music scoring data, audio data, music video data and composite data thereof insofar as it contains music data.

The music data may be provided (delivered) in a streaming form (it may be original streaming, or pseudo-streaming also is possible in which after a file as a whole is downloaded and reproduced, the file is deleted), or in a download form that can be stored in the external storage device 4. Further, the provided service may be charged or not charged. In the case of charged, each delivered tune may be charged or a fixed charge such as monthly basis also is possible. In the case of not charged, a limit may be provided for the selectable music number of the individually selected music selection list (MySelection), whereas in the case of charged, such limitation may be removed (or although there is a limit, the limit is set to be a sufficiently large number).

The electronic music apparatus TM may be an instrument other than electronic instruments. For instance, it may be a portable communication terminal such as cellphone equipped with a music reproduction function and a communication function as well as instruments such as a game instrument, a karaoke instrument and audio equipment. Further, as the WEB client terminal, a device other than PC but that has a similar function to PC is available, and for example, a device such as a PDA, a portable communication terminal and a game instrument that are equipped with a relatively large display, versatile operators and a communication function may be used.

The first WEB site SP and the second WEB site SM may be configured using different computers as in the embodiment, or may be configured by individual processing programs in one computer.

In accordance with the first major feature of this invention, a music data providing system includes: a first server (SP), a second server (SM), a client terminal (TP) and an electronic music apparatus (TM) that are connected with a communication network (CN), wherein the first server (SP) and the second server (SM) share a database (DS) including music selection list storage means (DBb) and music data storage means (DBa) that stores a large number of music data, wherein the first server (SP) includes: music selection screen transmission means (Sp1, Sp2) that transmits music selection screen data to the client terminal (TP); music selection list creation means (Sp3, Sp4) that creates a music selection list (Se; MySelection) based on music designation information received from the client terminal (TP); and music selection list storage control means (Sp4) that stores the music selection list (MySelection) created by the music selection list creation means in the music selection list storage means (DBb), wherein the client terminal (TP) includes: music selection screen display means (Tp2) that displays music selection screen based on the music selection screen data received from the first server (SP); and music designation information transmission means (Tp3, Tp4) that transmits, to the first server (SP), music designation information that designates a tune selected based on a user's operation with respect to the music selection screen displayed by the music selection screen display means, wherein the second server (SM) includes: music selection list transmission means (Sm2, Sm3) that transmits, in response to a request from the electronic music apparatus (TM), the music selection list (MySelection) stored in the music selection list storage means (DBb) to the electronic music apparatus (TM); and music data transmission means (Sm4) that transmits, in response to a request from the electronic music apparatus (TM), music data specified by the music selection list (MySelection) transmitted by music selection list transmission means from the music data storage means (DBa) to the electronic music apparatus (TM), wherein the electronic music apparatus (TM) includes: music selection list request means (Tm1 to Tm3) that requests the second server (SM) to provide a music selection list (MySelection); music data request means (Tm4) that requests the second server (SM) to provide music data based on the music selection list (MySelection) received from the second server (SM); and music data reproduction means (Tm5 to Tm7) that reproduces music data received from the second server (SM).

In the music data providing system according to this invention, it may be configured so that the music data reproduction means (Tm5, Tm6) drives at least any one of a tone generator (8, 9), a keyboard (14) and a display based on the music data received from the second server (SM).

In the music data providing system according to this invention, with respect to the music data providing server constituted by the first server (SP) and the second server (SM), the client terminal (TP) such as a personal computer and the electronic music apparatus (TM) such as an electronic instrument can communicate with the first server (SP) and the second server (SM), respectively, via the communication network (CN), the first and the second servers (SP, SM) can share a database (DS) including music selection list storage means (DBb) and music data storage means (DBa) that stores a large number of music data. Firstly, the client terminal (TP) accesses the first server (SP), so as to configure a music selection list (SE; MySelection) for instructing a tune desired by the user one by one, and the first server (SP) stores the configured music selection list as a sort of a program for music reproduction in the music selection list storage means (DBb). Then, the electronic music apparatus (TM) accesses the second server (SM) to reproduce music data provided one by one in accordance with the music selection list (MySelection) read out from the music selection list storage means (DBb).

More specifically, the first server (SP) transmits music selection screen data in response to an access from the client terminal (TP) (Sp1, Sp2). The client terminal (TP) displays music selection screen based on the music selection screen data received from the first server (SP), designates a desired tune on the music selection screen in accordance with a user's music selection operation to generate music designation information (music selection list setting information) and transmits the generated music designation information to the first server (SP) (Tp2, Tp3). The first server (SP) creates a music selection list (Se; MySelection) based on the music designation information received from the client terminal (TP) and stores it in the music selection list storage means (DBb) (Sp3, Sp4). The second server (SM) acquires the music selection list (MySelection) stored by the first server (SP) in the music selection list storage means (DBb) in response to an access (Tm1) from the electronic music apparatus (TM) and transmits it to the electronic music apparatus (TM) (Sm2, Sm3), and when a request (Tm2, Tm3) for the music data is made from the electronic music apparatus (TM) based on the transmitted music selection list (MySelection), music data specified by the transmitted music selection list (MySelection) is transmitted one by one from the music data storage means (DBa) to the electronic music apparatus (TM) (Sm4). Then, the electronic music apparatus (TM) reproduces music data received from the second server (SM) one by one (Tm4 to Tm7).

In accordance with the second major feature of this invention, a music data providing system includes: a first server (SP), a second server (SM), a client terminal (TP) and an electronic music apparatus (TM) that are connected with a communication network (CN), wherein the first server (SP) and the second server (SM) share a database (DS) including music selection list storage means (DBc, DBb) that stores a large number of music selection lists and music data storage means (DBa) that stores a large number of music data, wherein the first server (SP) includes: list selection screen transmission means (Sp5, Sp6) that transmits list selection screen data to the client terminal (TP); and music selection list storage control means (Sp7, Sp8) that stores a music selection list (Se; MyChannels) designated by list designation information received from the client terminal (TP) in the music selection list storage means (DBc, DBb), wherein the client terminal (TP) includes: screen display means (Tp6) that displays list selection screen based on the list selection screen data received from the first server (SP); and list designation information transmission means (Tp7, Tp8) that transmits, to the first server (SP), list designation information that designates a music selection list selected from the large number of music selection lists based on a user's operation with respect to the list selection screen displayed by the screen display means, wherein the second server (SM) includes: music selection list transmission means (Sm2, Sm3) that transmits, in response to a request from the electronic music apparatus (TM), the music selection list (MyChannels) designated by the list designation information from the music selection list storage means (DBc, DBb) to the electronic music apparatus (TM); and music data transmission means (Sm4) that transmits, in response to a request from the electronic music apparatus (TM), music data specified by the music selection list (MyChannels) transmitted by the music selection list transmission means from the music data storage means (DBa) to the electronic music apparatus (TM), wherein the electronic music apparatus (TM) includes: music selection list request means (Tm1 to Tm3) that requests the second server (SM) to provide a music selection list (MyChannels) designated by the list designation information; data provision request means (Tm4) that requests the second server (SM) to provide music data based on the music selection list received from the second server (SM); and music data reproduction means (Tm5, Tm6) that reproduces music data received from the second server (SM).

In the music data providing system according to this invention, with respect to the music data providing server constituted by the first server (SP) and the second server (SM), the client terminal (TP) such as a personal computer and the electronic music apparatus (TM) such as an electronic instrument can communicate with the first server (SP) and the second server (SM), respectively, via the communication network (CN). The first and the second servers (SP, SM) can share a database (DS) including music selection list storage means (DBc, DBb) in which a large number of music selection lists [ALL] are prepared for instructing tunes to be reproduced one by one as a sort of a program for music reproduction and music data storage means (DBa) that stores a large number of music data. Firstly, the client terminal (TP) accesses the first server (SP), so as to select a user's desired music selection list (SE; MyChannels) from the music selection lists [ALL] prepared in the music selection list storage means (DBc, DBb) and stores it in the music selection list storage means (DBc, DBb). Then, the electronic music apparatus (TM) accesses the second server (SM) to reproduce music data provided one by one from the second server (SM) in accordance with the desired music selection list (MyChannels) read out from the music selection list storage means (DBc, DBb).

More specifically, the first server (SP) transmits list selection screen data in response to an access from the client terminal (TP) (Sp5, Sp6). The client terminal (TP) displays list selection screen based on the list selection screen data received from the first server (SP), and transmits the list designation information (music selection list setting information) that designates a desired music selection list on the list selection screen by a user's selection operation to the first server (SP) (Tp6, Tp7). The first server (SP) selects a music selection list (MyChannels) designated by the list designation information received from the client terminal (TP) from the prepared music selection lists [ALL] and stores it in the music selection list storage means (DBc, DBb) (Sp7, Sp8). The second server (SM) acquires the desired music selection list (MyChannels) stored in the music selection list storage means (DBc, DBb) in accordance with the designation of the list designation information by the first server (SP) and transmits it to the electronic music apparatus (TM) (Sm2, Sm3), and when a request (Tm2, Tm3) for the music data is made from the electronic music apparatus (TM) based on the music selection list (MyChannels), music data specified by the transmitted music selection list (MySelection) is transmitted one by one f (Sm4). Then, the electronic music apparatus (TM) receives music data from the second server (SM) one by one and reproduces it (Tm4 to Tm7).

## Claims

1. A music data providing system comprising: a first server; a second server; a database that is useable by the first server and the second server; a client terminal accessible to the first server through a communication network; and an electronic music apparatus accessible to the second server through the communication network,
Wherein the database comprises:
music selection list storage means that is provided for storing music selection lists; and
music data storage means that stores music data of music pieces,
wherein the first server comprises:
music selection screen transmission means that transmits music selection screen data to the client terminal;
music selection list creation means that creates a music selection list based on music designation information received from the client terminal; and
storage control means that stores the music selection list created by the music selection list creation means in the music selection list storage means of the database,
wherein the client terminal comprises:
music selection screen display means that displays a music selection screen based on the music selection screen data received from the first server; and
music designation information transmission means that transmits, to the first server, the music designation information that designates one or more music pieces selected according to operation of a user of the client terminal on the music selection screen displayed by the music selection screen display means,
wherein the second server comprises:
music selection list transmission means that transmits, in response to a first request from the electronic music apparatus, a music selection list stored in the music selection list storage means of the database to the electronic music apparatus; and
music data transmission means that transmits, in response to a second request from the electronic music apparatus, music data of music pieces specified by the music selection list transmitted by the music selection list transmission means, from the music data storage means of the database to the electronic music apparatus, and
wherein the electronic music apparatus comprises:
music selection list request means that issues the first request for requesting the second server to provide the music selection list;
music data request means that issues the second request for requesting the second server to provide the music data based on the music selection list received from the second server; and
music data reproduction means that reproduces the music data received from the second server.

2. A music data providing system comprising: a first server which is accessible by a client terminal through a communication network; a second server which is accessible by an electronic music apparatus through the communication network; and a database that is useable by the first server and the second server,
wherein the database comprises:
music selection list storage means that is provided for storing music selection lists; and
music data storage means that stores music data of music pieces,
wherein the first server comprises:
music selection screen transmission means that transmits music selection screen data to the client terminal;
music designation information reception means that receives, from the client terminal, music designation information that designates one or more of music pieces selected by the client terminal using the music selection screen data;
music selection list creation means that creates a music selection list based on the music designation information received by the music designation information reception means; and
music selection list storage control means that stores the music selection list created by the music selection list creation means in the music selection list storage means of the database, and
wherein the second server comprises:
music selection list transmission means that transmits, in response to a request from the electronic music apparatus, a music selection list stored in the music selection list storage means of the database to the electronic music apparatus; and
music data transmission means that transmits, in response to a request from the electronic music apparatus, music data of music pieces specified by the music selection list transmitted by the music selection list transmission means, from the music data storage means of the database to the electronic music apparatus.

3. A music data providing system comprising: a first server; a second server; a database that is useable by the first server and the second server; a client terminal that is accessible to the first server through a communication network; and an electronic music apparatus that is accessible to the second server through the communication network,
wherein the database comprises:
music selection list storage means that is provided for storing a plurality of music selection lists; and
music data storage means that stores music data of music pieces,
wherein the first server comprises:
list selection screen transmission means that transmits list selection screen data to the client terminal; and
music selection list storage control means that stores a music selection list designated by list designation information received from the client terminal in the music selection list storage means of the database,
wherein the client terminal comprises:
screen display means that displays a list selection screen based on the list selection screen data received from the first server; and
list designation information transmission means that transmits, to the first server, the list designation information that designates the music selection list to be stored in the music selection list storage means of the database based on operation of a user of the client terminal on the list selection screen displayed by the screen display means,
wherein the second server comprises:
music selection list transmission means that transmits, in response to a first request from the electronic music apparatus, a music selection list designated by list designation information, from the music selection list storage means of the database to the electronic music apparatus; and
music data transmission means that transmits, in response to a second request from the electronic music apparatus, music data of music pieces specified by the music selection list transmitted by the music selection list transmission means, from the music data storage means of the database to the electronic music apparatus, and
wherein the electronic music apparatus comprises:
music selection list request means that sends to the second server the first request for requesting the music selection list designated by the list designation information;
music data request means that sends to the second server the second request for requesting the music data based on the music selection list received from the second server; and
music data reproduction means that reproduces the music data received from the second server.

4. A music data providing system comprising: a first server which is accessible by a client terminal through a communication network; a second server which is accessible by an electronic music apparatus through the communication network; and a database useable by the first server and the second server,
wherein the database comprises:
music selection list storage means that is provided for storing a plurality of music selection lists; and
music data storage means that stores music data of music pieces,
wherein the first server comprises:
list selection screen transmission means that transmits list selection screen data to the client terminal;
list designation information reception means that receives, from the client terminal, list designation information that designates a music selection list which is selected by the client terminal using the list selection screen data; and
music selection list storage control means that stores, in the music selection list storage means, the music selection list designated by the list designation information received by the list designation information reception means, and
wherein the second server comprises:
music selection list transmission means that transmits, in response to a request from the electronic music apparatus, a music selection list designated by list designation information, from the music selection list storage means of the database to the electronic music apparatus; and
music data transmission means that transmits, in response to a request from the electronic music apparatus, music data of the music pieces specified by the music selection list transmitted by the music selection list transmission means, from the music data storage means of the database to the electronic music apparatus.

5. The music data providing system according to claim 1, 2, 3 or 4, wherein the first server receives, from the client terminal, identification information for identifying a user of the client terminal, and the second server receives, from the electronic music apparatus, identification information for identifying a user of the electronic music apparatus, such that the music data providing system authenticates the user of the electronic music apparatus if the identification information received by the second server is the same as the identification information received by the first server, and that the identification information of the user is used commonly between the first server and the second server.

6. The music data providing system according to claim 1 or 3, wherein the electronic musical apparatus has at least one of a tone generator, a keyboard and a display, and the music data reproduction means drives at least one of the tone generator, the keyboard and the display based on the music data received from the second server.

7. The music data providing system according to claim 1 or 3, wherein the electronic music apparatus further comprises acquiring means for acquiring identification information of a user who uses the electronic music apparatus, and transmission means for transmitting the acquired identification information to the second server for authentication of the user, the acquiring means being provided in the form of a communication interface for receiving a signal carrying the identification information, or provided in the form of an adapter for receiving a memory medium containing the identification information.

8. The music data providing system according to claim 1 or 3, wherein the database is managed by a third server which is separate from the first server and the second server, and wherein the first server and the second server can access to the third server so as to utilize the database commonly by the first server and the second server.

9. The music data providing system according to claim 1 or 3, wherein the database is managed by one of the first server and the second server, and wherein the other of the first server and the second server can communicate with the one of the first server and the second server so as to utilize the database.
